Europäisches Patentamt

European Patent Office

Office européen des brevets

(19)

(11) **EP 0 883 503 B1**

(12) **FASCICULE DE BREVET EUROPEEN**

(45) Date de publication et mention
de la délivrance du brevet:
**10.10.2001 Bulletin 2001/41**

(21) Numéro de dépôt: **97904415.3**

(22) Date de dépôt: **11.02.1997**

(51) Int Cl.$^{7}$: **B60C 9/22**, B60C 9/20

(86) Numéro de dépôt international:
**PCT/EP97/00620**

(87) Numéro de publication internationale:
**WO 97/30856 (28.08.1997 Gazette 1997/37)**

(54) **ARMATURE DE SOMMET, PARTICULIEREMENT POUR PNEUMATIQUE "POIDS-LOURDS"**

VERSTÄRKUNGSGÜRTEL, INSBESONDERE FÜR LKW-REIFEN

CROWN REINFORCEMENT, IN PARTICULAR FOR A TRUCK OR LORRY TYRE

(84) Etats contractants désignés:
**DE ES FR GB IT**

(30) Priorité: **20.02.1996 FR 9602177**

(43) Date de publication de la demande:
**16.12.1998 Bulletin 1998/51**

(73) Titulaire: **COMPAGNIE GENERALE DES
ETABLISSEMENTS MICHELIN-MICHELIN & CIE
F-63040 Clermont-Ferrand Cédex 01 (FR)**

(72) Inventeur: **COLOM, André
F-63400 Chamalières (FR)**

(74) Mandataire: **Devaux, Edmond-Yves
Michelin & Cie,
Service SGD/LG/PI Ladoux
63040 Clermont-Ferrand Cedex 01 (FR)**

(56) Documents cités:
WO-A-96/20095       FR-A- 2 081 872
FR-A- 2 512 747       FR-A- 2 728 510
US-A- 4 688 615

• **PATENT ABSTRACTS OF JAPAN vol. 017, no.
389 (M-1449), 21 Juillet 1993 & JP 05 069702 A
(TOYO TIRE & RUBBER CO LTD), 23 Mars 1993,**

## Description

L'invention concerne un pneumatique à armature de carcasse radiale ancrée dans chaque bourrelet à au moins une tringle, et comprenant une armature de sommet constituée par au moins deux nappes dites de travail, superposées et formées d'éléments de renforcement, parallèles entre eux dans chaque nappe et croisés d'une nappe à la suivante en formant avec la direction circonférentielle du pneumatique des angles au plus égaux à 40° en valeur absolue.

Le brevet US 4.688.615 correspondant au préambule de la revendication 1 décrit une armature de sommet pour pneumatique radial composée d'une première nappe ete d'une deuxième nappe formées de câbles parallèles entre eux dans chaque nappe, croisés d'une nappe à la suivante en faisant avec la direction circonférentielle du pneumatique un angle pouvant être compris entre 5 et 60°. Entre les deux dites nappes est placée un troisième nappe de câbles disposés circonférentiellement, lesdits câbles ayant un diamètre au plus égal au diamètre des câbles des première et deuxième nappes, et étant réalisés à partir d'un matériau ayant une résistance à la traction plus faible que la résistance à la traction du matériau formant les câbles des première et deuxième nappes, ce qui confère à ladite troisième nappe une résistance à la traction moindre, et étant plus extensible que chacune des nappes à câbles croisés, ladite troisième nappe n'étant en outre pas plus large que la nappe de câbles à angle la plus large.

Le document FR-A-2 728 510 publiée le 28.06.96, concerne un pneumatique tel que décrit ci-dessus et plus particulièrement un pneumatique du type "Poids-Lourds", dont le rapport de la hauteur sur jante H sur la largeur axiale maximale S est au plus égal à 0,60. Ladite demande préconise, en vue d'améliorer l'endurance de l'armature de sommet d'un tel pneumatique, ainsi que la régularité de l'usure de sa bande de roulement, une architecture d'armature de sommet caractérisée par la présence combinée dans ladite armature d'une nappe, axialement continue, formée d'éléments de renforcement métalliques inextensibles, faisant avec la direction circonférentielle du pneumatique un angle au moins égal à 60°, et d'une nappe, d'éléments métalliques orientés sensiblement parallèlement à la direction circonférentielle, disposée radialement entre les deux nappes de sommet de travail.

Une telle architecture permet d'obtenir une meilleure résistance à la séparation entre nappes de travail, ainsi qu'une meilleure résistance à la fatigue des câbles de l'armature de carcasse, situés au dessous de l'armature de sommet ainsi constituée. La largeur axiale de la nappe additionnelle d'éléments de renforcement circonférentiels peut être moindre que les largeurs de nappes de travail.

Les températures de fonctionnement, dans les pneumatiques de rapport de forme au moins égal à 0,50, n'étant pas négligeables, les études de la deman-derresse ont conduit cette dernière à rechercher une solution plus efficace du point de vue thermique et économique.

Afin d'améliorer l'endurance des armatures de sommet et de carcasse sous-jacente d'un pneumatique, sans l'utilisation d'une nappe de sommet formée de câbles métalliques très fortement inclinés par rapport à la direction circonférentielle du pneumatique et située radialement au dessus de l'armature de carcasse, la présente invention propose une solution plus économique que celle décrite dans FR-A-2 728 510 ci-dessus.

Le pneumatique de rapport de forme H/S au moins égal à 0,50, conforme à l'invention, comprend une armature de carcasse radiale et une armature de sommet composée d'au moins deux nappes de sommet de travail de câbles métalliques inextensibles, croisés d'une nappe à la suivante en faisant avec la direction circonférentielle des angles compris entre 10° et 45°, d'une nappe de sommet dite de protection, formée de câbles métalliques élastiques en acier orientés par rapport à la direction circonférentielle avec un angle égal à l'angle formé par les câbles de la nappe de sommet de travail radialement la plus à l'extérieur, et d'une nappe additionnelle, continue axialement et formée d'éléments de renforcement métalliques orientés sensiblement parallèlement à la direction circonférentielle, ladite nappe additionnelle étant disposée au-dessus de la nappe de travail radialement la plus proche de l'armature de carcasse, la présence d'une nappe de sommet formée de câbles métalliques orientés par rapport à la direction circonférentielle d'un angle supérieur à 45° étant exclue, est caractérisé en ce que la largeur axiale de la nappe de protection est supérieure à la largeur axiale de la nappe additionnelle d'éléments métalliques en acier tout en restant inférieure à la largeur axiale de la nappe de travail radialement la plus à l'extérieur, et en ce que le rapport de la rigidité linéique $R = dF/d\varepsilon$ d'extension par unité de largeur de la nappe additionnelle sur la somme des rigidités linéiques de toutes les autres nappes de l'armature de sommet est compris entre 0,35 et 0,70, F étant la force de traction par unité de largeur de nappe, et $\varepsilon$ l'allongement relatif égal à 0,5 %.

De manière avantageuse, tant au point de vue technique qu'économique, la valeur de ce rapport sera obtenue par l'utilisation, dans la nappe dite additionnelle, d'éléments métalliques en acier de plus gros diamètre que celui des câbles métalliques en acier formant les nappes de travail.

Il faut entendre par câble inextensible un câble, par exemple en acier, qui a un allongement relatif inférieur à 0,5 % mesuré à 25 % de sa charge de rupture.

Des éléments métalliques orientés sensiblement parallèlement à la direction circonférentielle sont des éléments qui font avec ladite direction des angles compris dans l'intervalle +2,5°, -2,5° autour de 0°.

La rigidité linéique d'extension d'une nappe d'éléments de renforcement résulte de la force de traction, exercée selon la direction des câbles par unité de largeur de nappe, nécessaire pour obtenir un allongement relatif donné ε, et peut s'exprimer par la formule R = dF/dε, R étant la rigidité linéique de la nappe considérée, dF/dε la dérivée de la force de traction par unité de largeur de la nappe par rapport à l'allongement relatif, et ε étant égal à 0,5 %, ou par la formule $R = \frac{1}{p}\frac{dF}{d\varepsilon}$, p étant le pas entre les éléments de ladite nappe et dF/dε la dérivée de la force de traction par élément par rapport à l'allongement relatif.

Dans le cadre ci-dessus, la nappe additionnelle peut être formée de câbles en acier continus dits semi-élastiques, c'est-à-dire des câbles présentant des allongements relatifs à la rupture compris entre 2 % et 6 %. Ces câbles permettent d'obtenir le niveau de rigidité apte à une répartition harmonieuse de la tension circonférentielle entre les nappes de sommet de travail et la nappe additionnelle. Lesdits câbles sont avantageusement dits "bi-module", c'est-à-dire présentant une courbe, contrainte de traction en fonction de l'allongement relatif, ayant des faibles pentes pour les faibles allongements et une pente sensiblement constante et forte pour les allongements supérieurs. Le module avant cuisson très faible, pour des allongements inférieurs à 2 %, permet une augmentation du développement circonférentiel de la nappe additionnelle pendant la cuisson du pneumatique.

La nappe additionnelle peut aussi être formée de câbles métalliques en acier orientés circonférentiellement et coupés de manière à former des tronçons de longueur très inférieure à la longueur circonférentielle de la nappe, les coupures entre tronçons étant circonférentiellement décalées les unes par rapport aux autres. Un tel mode de réalisation permet de conférer, de manière simple, à la nappe additionnelle la rigidité désirée, quelle qu'elle soit.

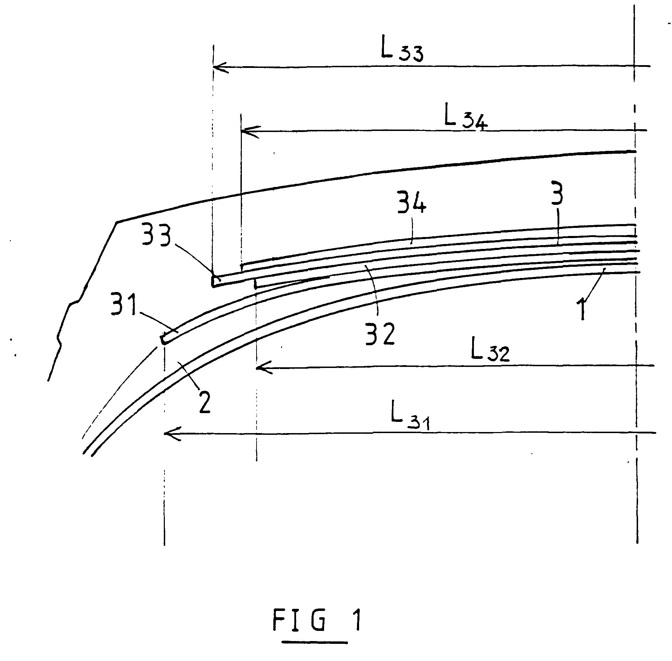

Les caractéristiques et avantages de l'invention seront mieux compris à l'aide de la description qui suit et qui se réfère au dessin, illustrant à titre non limitatif un exemple d'exécution, et sur lequel la figure 1 unique représente schématiquement, vue en section méridienne, une armature de sommet conforme à l'invention.

Le pneumatique P, de dimension 315/80 R 22.5, a un rapport de forme H/S égal à 0,8, H étant la hauteur du pneumatique P sur sa jante de montage et S sa largeur axiale maximale. Ledit pneumatique P comprend une armature de carcasse radiale (1), formée d'une seule nappe de câbles métalliques en acier, ancrée dans chaque bourrelet à au moins une tringle en formant un retournement. L'armature de carcasse (1) est frettée par une armature de sommet (3), formée radialement de l'intérieur à l'extérieur :

- d'une première nappe de sommet travail (31), formée de câbles métalliques inextensibles en acier, orientés d'un angle α égal à 22°, et dont la partie centrale est parallèle à l'armature de carcasse (1), les câbles respectivement de la nappe de carcasse et de la nappe de travail étant séparés par les seules épaisseurs de calandrage, les parties latérales étant séparées de l'armature de carcasse par des profilés de caoutchouc (2) de manière à conférer à ladite nappe une faible courbure ;

- surmontant radialement la première nappe de travail (31), d'une nappe additionnelle (32) formée d'éléments métalliques inextensibles en acier, chaque élément ayant une longueur circonférentielle sensiblement égale à 1/6 de la longueur circonférentielle de la nappe (32), et lesdits éléments étant orientés à 0° ;

- puis d'une deuxième nappe de sommet travail (33) formée de câbles métalliques identiques à ceux de la première nappe (31), et faisant avec la direction circonférentielle un angle β, opposé à l'angle α et, dans le cas montré, égal audit angle α de 22°, (mais pouvant être différent dudit angle α) ;

- et enfin d'une dernière nappe (34) de câbles en acier dits élastiques, orientés par rapport à la direction circonférentielle d'un angle θ de même sens que l'angle β et égal audit angle β, (mais pouvant être différent), cette dernière nappe étant une nappe dite de protection, et des câbles dits élastiques étant des câbles ayant à la rupture un allongement relatif au moins égal à 4 %.

La largeur axiale $L_{31}$ de la première nappe de travail est égale à 226 mm, ce qui est, pour le pneumatique considéré, sensiblement égal à la largeur de la bande de roulement, qui est égale, dans le cas étudié, à 235 mm. La largeur axiale $L_{33}$ de la deuxième nappe de travail (33) est inférieure à la largeur $L_{31}$ de la première nappe de travail (31) et égale à 204 mm. La largeur axiale $L_{32}$ de la nappe additionnelle (32) est égale à 160 mm. La dernière nappe de sommet (34), dite de protection, a une largeur $L_{34}$ très légèrement supérieure à la largeur $L_{32}$ de la nappe additionnelle, soit 170 mm.

La rigidité linéique d'extension par unité de largeur de la nappe de travail (31), ou de la nappe de travail (33), identique dans le cas présent, puisque formée des mêmes câbles métalliques 9.28 acier non frettés, de diamètre égal à 1,09 mm, inextensibles et continus sur toute la largeur de la nappe, lesdits câbles étant disposés avec le même pas de 1,8 mm, est supérieure à 4000 daN/mm à 0,5 % d'allongement relatif, et, dans le cas étudié, égale à 5500 daN/mm. La rigidité, du même nom et mesurée dans les mêmes conditions, de la nappe additionnelle (32), formée de câbles métalliques acier 27.23 non frettés, de diamètre égal à 1,4 mm, et coupés de sorte à avoir des tronçons de câbles dont la longueur circonférentielle est sensiblement égale à 20 % de la longueur circonférentielle de la nappe, les rangées d'éléments étant séparées entre elles d'un pas égal à 2 mm, est alors, pour l'allongement relatif de 0,5 %, égale à 5500 daN/mm.

Le pneumatique décrit ci-dessus a été testé, d'une part sur volant d'essai, dans des conditions simulant un roulage sur véhicule sous une charge de 4000 kg pour une pression de gonflage de 8,5 bars, sous un angle de dérive de 5° et à une vitesse de 80 km/h, d'autre part sur véhicule d'essai, sous une charge supérieure à 4500 kg pour une pression de gonflage de 8,5 bars, à une vitesse moyenne de 105 km/h, le véhicule pouvant être considéré comme roulant en ligne droite. Les mesures de température, dans les essais sur véhicule, prises en extrémités de nappes de sommet de travail mettent en évidence un léger gain en température de fonctionnement, mais, par contre, on observe un gain d'au moins 100 % en kilométrage avant rupture par rapport à un pneumatique d'architecture usuelle, c'est-à-dire avec une armature de sommet composée d'une nappe de câbles fortement inclinés, de deux nappes de travail de câbles faiblement inclinés croisés d'une nappe à la suivante, et d'une nappe de protection de câbles élastiques. Le gain kilométrique est tout aussi important dans le cas du roulage sur volant d'essai et sous dérive de 5°, puisqu'atteignant 80 % : 7800 km parcourus par le pneumatique conforme à l'invention, alors que le pneumatique usuel n'a réalisé que 4430 km.

La nappe additionnelle (32) peut aussi être formée de câbles en acier dits "bi-module". Une certaine élasticité de la nappe (32) n'étant utile que lors de la conformation du pneumatique dans le moule de vulcanisation, un câble présentant un faible module, par exemple au plus égal à 1000 dan/mm$^2$, de l'origine à 1 % d'allongement relatif, et un module par exemple supérieur à 8000 daN/mm$^2$ pour un allongement relatif supérieur à 2 %, peut être utilisé.

## Revendications

1. Pneumatique de rapport de forme H/S au moins égal à 0,50 comprenant une armature de carcasse radiale (1) et une armature de sommet (3) composée de deux nappes de sommet de travail (31, 33) de câbles métalliques inextensibles, croisés d'une nappe à la suivante en faisant avec la direction circonférentielle des angles (α, β) compris entre 10° et 45°, de largeurs L$_{31}$ et L$_{33}$, d'une nappe de sommet (34) dite de protection, formée de câbles métalliques élastiques en acier orientés par rapport à la direction circonférentielle avec un angle θ, de même sens que l'angle β des câbles de la nappe de travail (33) radialement la plus à l'extérieur, de largeur L$_{34}$ et d'une nappe additionnelle (32), continue axialement et formée d'éléments de renforcement métalliques orientés sensiblement parallèlement à la direction circonférentielle, ladite nappe additionnelle (32) étant disposée au-dessus de la nappe de travail (31) radialement la plus proche de l'armature de carcasse (1), la présence d'une nappe de sommet formée d'éléments métalliques faisant avec la direction circonférentielle un angle supérieur à 45° étant exclue, **caractérisé en ce que** la largeur axiale L34 de la nappe de protection (34) est supérieure à la largeur axiale L$_{32}$ de la nappe additionnelle (32) d'éléments métalliques en acier, tout en restant inférieure à la largeur axiale L$_{33}$ de la nappe de travail (33) radialement la plus à l'extérieur, et **en ce que** le rapport de la rigidité linéique R = $\frac{dF}{d\epsilon}$ d'extension par unité de largeur de la nappe additionnelle (32) sur la somme des rigidités linéiques de toutes les autres nappes (31, 33, 34) de l'armature de sommet est compris entre 0,35 et 0,70, F étant la force de traction par unité de largeur d'une nappe, et ε l'allongement relatif égal à 0,5 %.

2. Pneumatique selon la revendication 1, **caractérisé en ce que** les éléments de renforcement de la nappe additionnelle (32) sont en acier et de diamètre supérieur à celui des câbles en acier des deux nappes de travail (31, 33).

3. Pneumatique selon l'une des revendications 1 ou 2, **caractérisé en ce que** la nappe additionnelle (32) est formée de câbles en acier continus dits semi-élastiques, présentant des allongements relatifs à la rupture compris entre 2 % et 6 %, et une courbe, contrainte de traction en fonction de l'allongement relatif, ayant des faibles pentes pour les faibles allongements et une pente sensiblement constante et forte pour les allongements supérieurs.

4. Pneumatique selon la revendication 3, **caractérisé en ce que** les câbles présentent un faible module, au plus égal à 1000 daN/mm$^2$, de l'origine à 1 % d'allongement relatif, et un module supérieur à 8000 daN/mm$^2$ pour un allongement relatif supérieur à 2 %.

5. Pneumatique selon l'une des revendications 1 ou 2, **caractérisé en ce que** la nappe additionnelle (32) est formée de câbles métalliques en acier , orientés circonférentiellement et coupés de manière à former des tronçons de longueur très inférieure à la longueur circonférentielle de la nappe, les coupures entre tronçons étant axialement décalées les unes par rapport aux autres.

## Patentansprüche

1. Reifen mit einem Formverhältnis H/S von mindestens gleich 0,50, mit einer radialen Karkassenbewehrung (1) und einer Scheitelbewehrung (3), die aus zwei Scheitel-Arbeitslagen (31, 33) aus undehnbaren Metallseilen zusammengesetzt sind, die von einer Lage zur folgenden unter Bildung von Winkeln (α, β), die zwischen 10° und 45° liegen, zur Umfangsrichtung überkreuz laufen, mit Breiten $L_{31}$ und $L_{33}$, aus einer Schutzlage genannten Scheitellage (34), die aus elastischen Metallseilen aus Stahl gebildet ist, die in Bezug auf die Umfangsrichtung unter einem Winkel θ ausgerichtet sind. in derselben Richtung wie der Winkel β der Seile der radial am weitesten außenliegenden Arbeitslage (33), mit einer Breite $L_{34}$, und aus einer zusätzlichen Lage (32), die axial durchgeht und aus Metall-Verstärkungselementen gebildet ist, die im wesentlichen parallel zur Umfangsrichtung ausgerichtet sind, wobei die genannte, zusätzliche Lage (32) über der Arbeitslage (31) angeordnet ist, die radial der Karkassenbewehrung (1) nächstgelegen ist, und wobei die Anwesenheit einer Scheitellage ausgeschlossen ist, die aus Metallelementen gebildet ist, die zur Umfangsrichtung einen Winkel bilden, der größer ist als 45°, **dadurch gekennzeichnet, daß** die axiale Breite L34 der Schutzlage (34) größer ist als die axiale Breite $L_{32}$ der zusätzlichen Lage (32) aus Stahl-Metallelementen, aber kleiner bleibt als die axiale Breite $L_{33}$ der radial am weitesten außenliegenden Arbeitslage, und daß das Verhältnis der linienbezogenen Dehnungssteifigkeit R=dF/dε pro Breiteneinheit der zusätzlichen Lage (32) zur der Summe der linienbezogenen Steifigkeiten aller anderen Lagen (31, 33, 34) der Scheitelbewehrung zwischen 0,35 und 0,70 liegt, wobei F die Zugkraft pro Breiteneinheit einer Lage und ε die relative Längung bzw. Dehnung gleich 0,5% ist.

2. Reifen nach Anspruch 1, **dadurch gekennzeichnet, daß** die Verstärkungselemente der zusätzlichen Lage (32) aus Stahl bestehen und einen größeren Durchmesser aufweisen als den der Stahlseile der beiden Arbeitslagen (31, 33).

3. Reifen nach einem der Ansprüche 1 oder 2, **dadurch gekennzeichnet, daß** die zusätzliche Lage (32) aus sogenannten halbelastischen, durchgehenden Stahlseilen gebildet ist, die relative Bruchdehnungen aufweisen, die zwischen 2% und 6% liegen, und eine Zugspannungskurve in Funktion der relativen Dehnung, die geringe Steigungen für geringe Dehnungen und eine im wesentlichen konstante und kräftige Steigung für höhere Dehnungen aufweist.

4. Reifen nach Anspruch 3, **dadurch gekennzeichnet, daß** die Seile, ausgehend von 1% relativer Dehnung, ein geringes Modul aufweisen, das höchstens 1000 daN/mm² beträgt, und für eine relative Dehnung von mehr als 2% ein Modul von mehr als 8000 daN/mm²

5. Reifen nach einem der Ansprüche 1 oder 2, **dadurch gekennzeichnet, daß** die zusätzliche Lage (32) aus Metallseilen aus Stahl gebildet ist, die in Umfangsrichtung ausgerichtet und derart zugeschnitten sind, daß sie Stücke mit einer Länge bilden, die sehr viel geringer ist als die Umfangslänge der Lage, wobei die Schnittstellen zwischen den Stücken zueinander axial versetzt sind.

## Claims

1. A tyre having an H/S form ratio of at least 0.50, comprising a radial carcass reinforcement (1) and a crown reinforcement (3) composed of two working crown plies (31, 33) made of inextensible metal cables, which are crossed from one ply to the next, forming angles (α, β) of between 10° and 45° with the circumferential direction, of widths $L_{31}$ and $L_{33}$, of a so-called protective crown ply (34), formed of elastic metal cables made of steel which are oriented relative to the circumferential direction at an angle θ, of the same direction as the angle β of the cables of the radially outermost working ply (33), of width $L_{34}$ and of an additional ply (32) which is axially continuous and formed of metallic reinforcing elements oriented substantially parallel to the circumferential direction, said additional ply (32) being arranged above the working ply (31) radially closest to the carcass reinforcement (1), the presence of a crown ply formed of metallic elements forming an angle greater than 45° with the circumferential direction being ruled out, **characterised in that** the axial width L34 of the protective ply (34) is greater than the axial width $L_{32}$ of the additional ply (32) of metallic elements made of steel, whilst remaining less than the axial width $L_{33}$ of the radially outermost working ply (33), and **in that** the ratio of the rigidity of extension R = dF/dε, per unit of width of the additional ply (32) to the total of the rigidities of extension of all the other plies (31, 33, 34) of the crown reinforcement is between 0.35 and 0.70, F being the tensile force per unit of width of a ply, and ε the relative elongation equal to 0.5%.

2. A tyre according to Claim 1, **characterised in that** the reinforcing elements of the additional ply (32) are made of steel and are of a larger diameter than that of the steel cables of the two working plies (31, 33).

3. A tyre according to one of Claims 1 or 2, **characterised in that** the additional ply (32) is formed of so-called semi-elastic continuous steel cables, having relative elongations at break of between 2% and 6%, and a curve of tensile stress as a function of relative elongation having gradual slopes for the low elongations and a substantially constant, steep slope for the higher elongations.

4. A tyre according to Claim 3, **characterised in that** the cables have a low modulus, at most equal to 1000 daN/mm$^2$, from the origin to 1% relative elongation and a modulus greater than 8000 daN/mm$^2$ for a relative elongation of more than 2%.

5. A tyre according to one of Claims 1 or 2, **characterised in that** the additional ply (32) is formed of metal cables made of steel, which are oriented circumferentially and cut so as to form sections of a length very much less than the circumferential length of the ply, the cuts between sections being axially offset relative to each other.

FIG 1